Europäisches Patentamt

European Patent Office

Office européen des brevets

(19)

(11) Publication number: **0 136 175**
A2

(12) **EUROPEAN PATENT APPLICATION**

(21) Application number: **84306558.2**

(22) Date of filing: **26.09.84**

(51) Int. Cl.⁴: **F 28 D 17/04**, F 23 L 15/02

(30) Priority: **28.09.83 GB 8325973**

(43) Date of publication of application: **03.04.85**
**Bulletin 85/14**

(84) Designated Contracting States: **DE FR**

(71) Applicant: **NATIONAL RESEARCH DEVELOPMENT CORPORATION**, 101 Newington Causeway, London SE1 6BU (GB)

(72) Inventor: **Willmott, Alfred John, West Lea 76 Middlecave Road, Malton North Yorkshire Y017 0NQ (GB)**

(74) Representative: **Hasler, Christopher, Patent Department National Research Development Corporation 101 Newington Causeway, London SE1 6BU (GB)**

(54) **Thermal regenerator system.**

(57) Thermal regenerators are usually of massive dimensions or of the rotary type which though relatively small suffers from sealing problems. Small fixed bed regenerators cannot be used because they require frequent reversals from heating to cooling and vice versa and they are out of service during reversal. In the invention a sufficiently large number of fixed bed thermal regenerators 10 to 29 are used to allow some to be reversed while others supply the load. In this way reversal time becomes unimportant and the surface area to volume ratios of the packing material can be reduced so allowing small size regenerators to be used for a relatively large thermal load.

- 1 -

125833

## THERMAL REGENERATOR SYSTEM

The present invention relates to thermal regenerator systems, thermal regenerators for such systems, and methods of operating the systems. Thermal regenerators are a form of heat exchanger in which a hot fluid passing through porous packing loses heat to that packing where it is temporarily stored. Subsequently the flow of hot fluid is stopped and a cold fluid is passed through the same pores of the packing, usually in the contra flow direction, and the heat is regenerated. A complete cycle of operation consists of a hot period when heat is stored in the packing, and a cold period when the heat is recovered. Cycle time is defined here to consist of the sum of the hot and cold periods.

For the continuous transfer of heat between the hot and cold fluids, at least two fixed bed regenerators (that is the packing is stationary) are required in which at any instant, the hot fluid is passing through one regenerator, the cold fluid through the other. Alternatively a single rotary regenerator can be employed in which a cylindrical regenerator packing rotates about the axis of the cylinder so that each radial section passes alternately through the streams of hot and cold fluids.

Except for regenerators to handle very low flow rates (for example for use in domestic refrigerators), fixed bed regenerators with typically two or three, or at the most four, units cannot be and are not switched rapidly. The cycle time is therefore typically 30 to 120 minutes. As a result the surface area to volume ratio of the packing of a fixed bed system must be held relatively low to secure the high thermal efficiencies required, typically about 80%. Consequently, fixed bed regenerators in industry are typically massive: Cowper stoves for ironmaking and zinc/lead smelting are as large as a small church tower. Rotary regenerators do not suffer from this disadvantage. The cylinder rotates at about 2-3 revolutions per minute yielding a cycle time measured in tens of seconds. Consequently packings with a high surface area to volume ratio may be used yielding so called 'compact heat exchangers'.

The low area to mass ratio of the packing of a fixed bed regenerator carries another disadvantage in addition to size. The response time to step changes in operation for typical fixed bed systems is measured in weeks whereas the corresponding response time for a rotary regenerator is usually less than one or two days.

Rotary regenerators facilitate rapid switching since it is inherent in their design that only a small part of the packing is being reversed at any instant, whereas all the packing of a single fixed bed regenerator must be subject to a simultaneous reversal. However rotary regenerators while relatively small suffer from severe problems of sealing at both ends of the cylinder to prevent the hot and cold fluid streams mixing.

According to a first aspect of the present invention there is provided a thermal regenerator system comprising

at least four fixed bed regenerators each containing packing material for heat storage wherein the surface to volume ratio of the packing material is in the range 150 to 10,000 metres$^{-1}$, and

a thermal load to which heated or cooled fluid is to be supplied,

the number of regenerators being such that at least two can be undergoing reversal while the load is adequately supplied from the others.

The main advantage of such a system is that regenerators can frequently be reversed, for example from heating a fluid to being heated by the fluid, because reversal time is no longer particularly important. Previously reversal time in a regenerator handling a large amount of fluid might for example take 10 minutes and for that time that regenerator was out of active operation. However with the present invention one or more regenerators undergo reversal while others maintain the required heating or cooling of a fluid so that reversal time is unimportant. Frequent reversals allow the surface to volume ratio to be reduced to the point where the total volume of packing material in the complete system (and therefore regenerator system size) is approximately equal to that of a rotary regenerator for the same thermal load.

- 3 -

Thus according to a second aspect of the invention there is provided a method of operating a thermal regenerator system comprising

employing a first group of the regenerators to change the temperature of fluid in one sense,

using fluid to change the temperature of the packing of a second group of the regenerators in the same sense,

reversing a third group of regenerators from operating in the first group to operating in the second group,

reversing a fourth group of the regenerators from operating in the secondary group to operating in the first group, and

systematically cycling each regenerator through each said group with at times all four of the said groups currently containing at least one regenerator.

By allowing the reversal of a number of regenerators to overlap in time with each other and with the heating and cooling periods of other regenerators in the system, and provided a sufficient number of small regenerators are used, many operating restrictions caused by the time taken to switch a fixed regenerator from one mode to the other in a conventional two or three bed system can be overcome, particularly when the complete system has to cope with large flow rates.

Preferably a system according to the invention employs a fairly large number of regenerators, for example typically in the range 6 to 24 but up to 50, and as a result many of the advantages of rotary regenerators, such as reduced size and much reduced response time to step changes, are achieved by the system which is inherently robust and without the sealing problems associated with rotary regenerators. These advantages are realised because each regenerator contains a small portion of the total packing of the system and therefore a succession of small portions of the packing can be switched from one mode to the other at frequent intervals. Each regenerator does not remain long in one mode and the surface area to volume ratio of its packing can therefore be high giving the regenerator and the system a comparatively small overall size.

Thus the regenerators used are compact and significantly less expensive to manufacture than conventional systems. Although of the fixed bed type, the regenerators used are not massive and since the rotary principle is not used the costs of providing a mechanism to rotate the packing are eliminated.

The invention has a further important advantage since it facilitates the use of a relatively large number of regenerators and temperature swing of heated gas is inversely proportional to the number of regenerators in an installation.

Useful applications of the invention include for example furnaces for melting scrap metal, preheating air for power station and other boilers, and blast furnaces. Systems of regenerators or individual regenerators may vary over a wide range of sizes including relatively small regenerators for use in preheating air for internal combustion engines for lorries and cars.

Although a large number of regenerators has been mentioned in connection with a complete system and will normally be used, in some circumstances significant advantages can be obtained by using a small number, for example four regenerators, in a system.

A further important advantage is the ability to withdraw a single regenerator for cleaning or repair without causing significant system degradation. Systems according to the invention which include sufficient regenerators to allow one to be withdrawn from service for cleaning, possibly periodically and even as part of the reversal procedure, allow regenerators to be used in "dirty" applications, such as paper making, where they were previously thought to be impractical.

Another advantage is a flexible choice of packing, which is expected to allow much higher temperatures, for example up to 1400°C, to be accommodated than is possible with conventional rotary regenerators.

The sealing problems of rotary regenerators preclude significant pressure differences being accommodated between the hot and the cold fluids. This important restriction does not apply to fixed bed systems including those of the present invention.

Cycle times for regenerators according to the invention may vary from 10 seconds to 20 minutes depending for instance on the size of regenerator, or type of packing and application.

Advantageously, though not necessarily, a computer is provided to control changes in regenerator operation from heating to cooling and _vice versa_, the valves being under the control of the computer. In this way regenerators can be resequenced for operational purposes at any moment and at frequent intervals. In addition the system can be used for time varying multiple uses of waste heat, for example preheating of combustion air and/or the drying of materials and/or providing energy for the heating of small buildings, the time variations being controlled by the computer.

Regenerators for use in systems according to the invention are, except for low flow rate systems, within the invention and thus according to a third aspect of the invention there is provided a fixed bed thermal regenerator capable of operating with fluid flow rates greater than 0.01 kilograms per second, comprising a housing having at least two ports and containing a packing material for heat storage, wherein the surface to volume ratio of the packing material is in the range 150 to 10,000 $\text{metres}^{-1}$.

Typically flow rates are from 0.1 Kg/second upwards.

Some embodiments of the invention will now be described by way of example with reference to the accompanying drawings in which:-

Figure 1 is a schematic diagram of a thermal regenerator system according to the invention, and

Figure 2 is a schematic diagram of one of the regenerators of Figure 1 with associated ducts, valves and electrical connections.

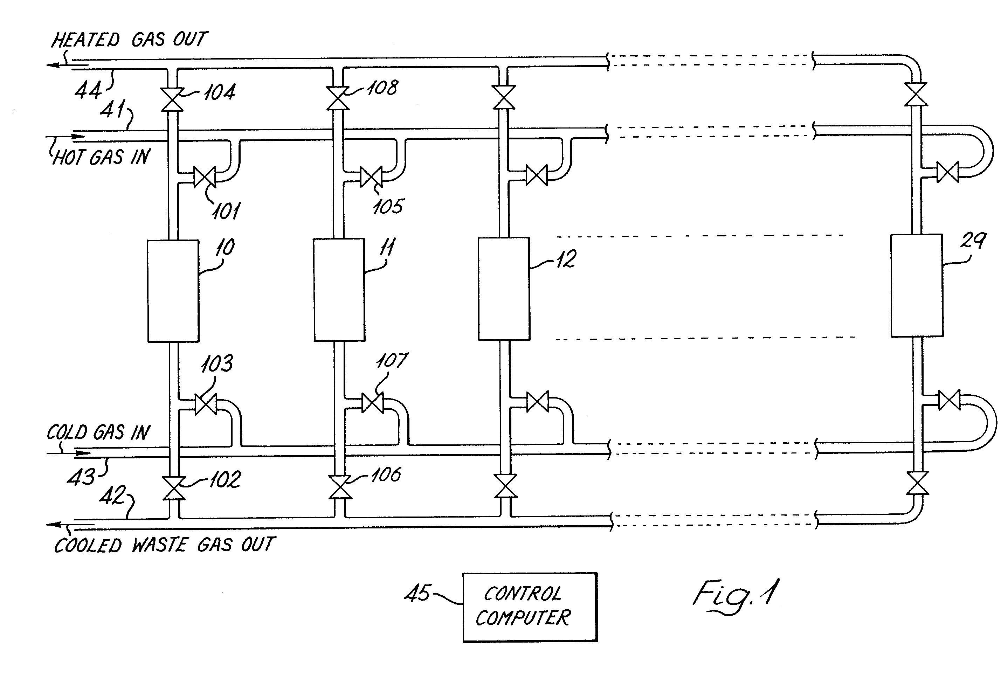

Four regenerators 10, 11, 12 and 29 of for example, a twenty regenerator system are shown in Figure 1. Each regenerator is of the fixed bed type with a surface area to volume ratio for the packing of typically about 600 $\text{metres}^{-1}$. (The volume referred to is that of the packing and excludes the volume of the voids which permit the flow of gas through the packing in the regenerator.) The regenerators are constructed according to the principles described in Part 4 "Heat Transfer in Counterflow, Parallel Flow and Cross Flow" by H. Hausen, published by McGraw-Hill 1983, except that the said ratio for the packing has the value given above. Each fixed bed regenerator may for example include a metallic plate or ceramic honeycomb packing. The design of a shell, ports and valves for the regenerator may be conventional.

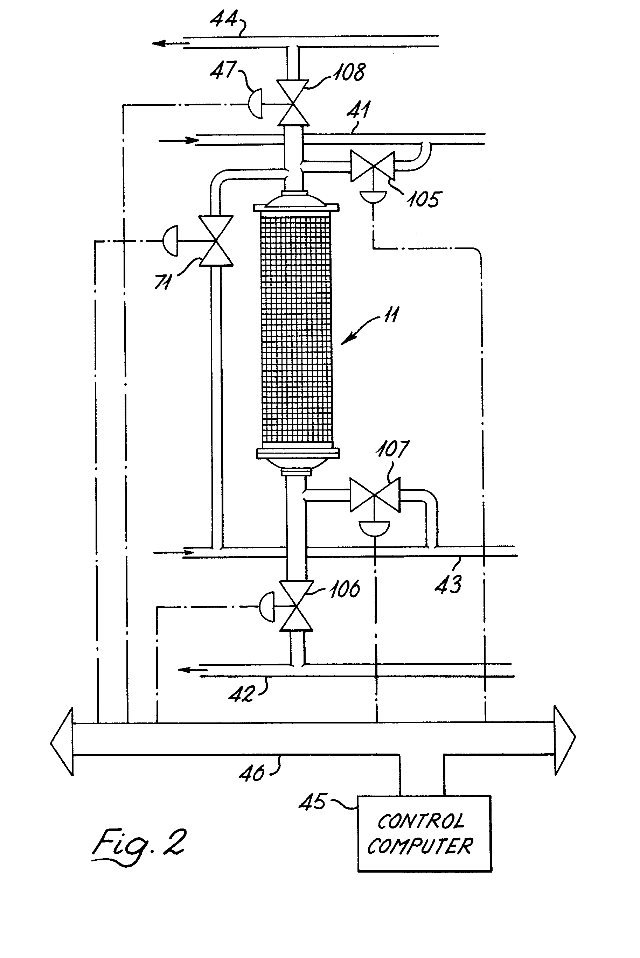

In order to heat the regenerators hot gas, often in the form of the waste products of combustion of fuel gas, is passed along the duct 41 from a thermal load, for example a scrap metal melting furnace, and after passing through some of the regenerators reaches a duct 42 and then exits to waste. Gas to be heated for the thermal load, often the air for combustion of the aforementioned fuel gas, passes along a duct 43, through some regenerators which have already been heated and out to the fuel gas burners at the melting furnace, or other heating load, through a duct 44. Taking the regenerator 10 as an example, it will be seen that if the regenerator is to be heated then valves 101 and 102 are opened, but if the gas is to be heated the valves 103 and 104 are opened. These valves are usually electrically or pneumatically operated and together with corresponding valves in the other regenerators are controlled by a computer 45. To avoid unnecessarily complicating Figure 1 the electrical connections between the computer 45 and the valves are not shown. However they are indicated for the valve 11 in Figure 2 by chain dotted lines which are intended to show that in a typical installation a communications bus 46 visits every valve controller (such as the controller 47), there being one such controller for each valve. Signals on the communications bus are multiplexed by the computer to be directed to a particular valve and the controller of that valve demultiplexes signals received and operates the valve accordingly.

In operation in a typical situation, nearly half the regenerators may be heating air for the furnace burners, nearly half may be being heated by hot gas from the furnace and the remainder are being reversed. The system is operated cyclically and the regenerators can be regarded as being in the following four groups:-

regenerators heating air;

regenerators being reversed from heating to being heated; regenerators being heated and regenerators being reversed from being heated to heating.

The sequence of operation is, of course, subject to change; for example a regenerator may be withdrawn for cleaning or repair so that the system operates with a reduced number of regenerators, and when this regenerator is ready for use again it may be placed in a different position in the sequence.

For example regenerators 10 to 17 may be heating air, the regenerators 18 and 19 may be being reversed from heating air to being heated, the regenerators 20 to 27 may be being heated by hot gas and the regenerators 28 and 29 may be being reversed from being heated to heating. In the next phase of cyclic operation the regenerators 29 and 10 to 16 are heating, 17 and 18 are being reversed from heating to being heated, 19 to 26 are being heated and 27 and 28 are being reversed from being heated to heating. Progression through the groups is on the same basis following the numerical order of the regenerator designations and further phases continue the cyclic process until the regenerators resume the states given at the beginning of this example.

It is this type of procedure which allows frequent reversals without a significant time penalty.

In another way of operating a system such as that of Figure 1, for example, three regenerators may be reversed in one sense while only two are reversed in another sense, particularly where reversal in the two senses requires different intervals or if flow rates are different.

If the pressure of the hot air is different from that of the cold air, the time required for reversal includes that needed to pressurise or depressurise the regenerator. Occasionally one or more of the regenerators may be closed to all the ducts 41 to 44 for maintenance purposes.

Usually the control computer controls the valves to give hot and cold periods of fixed durations for the regenerators and fixed reversal periods, all under the control, for example, of a keyboard,

- 8 -

so that scheduling changes may be made easily. The computer also controls the rate of flow through the individual regenerators. Each regenerator contains at its input or output a flowmeter (not shown) connected to the computer. In response to the flowmeter output, the computer controls either one of the valves shown in the Figure, if it is a variable position valve, (where flow rate depends on the position of a control member) or if both valves shown are simply open and close valves, a further valve which is of the variable position type.

When a regenerator is to be switched from heating combustion gas for a melting furnace, for example, to being heated, the computer first closes the two valves connecting the regenerator to the ducts 43 and 44 conveying gas to the furnace and then opens the two valves connecting the ducts 41 and 42 so that the regenerator is heated. Since only one or a few regenerators are reversed at this time the effect on the two gas circuits is relatively insignificant. Similarly when a regenerator is to be reversed from being heated to heating air, the computer controls the valves of the regenerator to switch it to gas heating. As mentioned above such reversing of regenerators is carried out by the computer comparatively frequently and each regenerator remains in one mode for a relatively short time compared with a conventional fixed bed regenerator. The duration of the cycle time is determined by the required efficiency of the system and the area to mass ratio of the packing.

In another arrangement the computer may respond to heat sensors in the regenerators in switching from heating gas to being cooled and _vice_ _versa_.

Figure 2 shows an optional valve 71 under the control of the computer 45 and related ducts for purging the regenerator 11 when the waste gas (that is the hot gas in the duct 41) must not be allowed even temporarily into the heated gas output duct 44 and thence to fuel gas burners. When purging is required the other regenerators 10 to 29 also have corresponding valves and ducts. To purge the regenerator 11 after it has been heated by hot gas, the valves 71 and 106 are opened and cold gas from the duct 43 displaces gas in the regenerator into the duct 42. At the end of this process the regenerator 11 contains gas from the cold gas duct 43 which is then passed to the duct 44 by closing the valves 71 and 106 and opening the valves 107 and 108. Purging, when performed, may sometimes be considered as part of the reversal procedure.

From the description of the system given above, it will be apparent that the invention can be put into practice in many different ways. The program operated by the computer 45 may enable various combinations of loads for the heated air to be connected as required, depending for example on the time of the year. In some applications a special purpose or electric-mechanical system may be used instead of a computer to control and organise regenerator sequencing and valve operation.

Where a furnace installation includes an array of burners each with ducts to supply air for combustion, burners in the array may be switched in and out of use with each burner on and some off for the same length of time and switching progressing cyclically around the array. When a burner is off its associated ducts may be used to remove waste gas from the furnace, and thus the ducts also operate periodically to supply and remove gas from the furnace.

The regenerator system of the present invention, with its particular class of packing material, may then be coupled to the ducts, preferably with each burner coupled to a respective regenerator, so that heated gas is supplied to the burners and heat is removed from gas leaving the furnace. The regenerators of the system are then comparatively small. The method of the invention is also used in this arrangement.

Although in many applications the fluid is air both before and after use in combustion, the invention is also applicable to other gasses and liquids. A wide range of other applications is envisaged including air conditioning.

- 10 -

Ducts need not be as shown and can be optimised for user's applications.  In addition the regenerators can be shaped to give an orderly arrangement with minimum overall duct length.

30S

0136175

- 11 -

CLAIMS

1. A thermal regenerator system comprising at least four fixed bed regenerators each containing packing material for heat storage, and a thermal load to which heated or cooled fluid is to be supplied, characterised in that the surface to volume ratio of the packing material in each regenerator is in the range 150 to 10,000 metres$^{-1}$, and the number of regenerators is such that at least two can be undergoing reversal while the load is adequately supplied from the others.

2. A system according to Claim 1 characterised in that the number of regenerators is such that at least one can be undergoing cleaning while the load is adequately supplied from others.

3. A system according to Claim 1 or 2 characterised in that the number of regenerators is in the range 6 to 24.

4. A system according to any preceding claim characterised by a computer and electrically operated valves to control fluid flow through the regenerators.

5. A system according to any preceding claim characterised by first and second, and third and fourth ducts connected to the regenerators for fluid to be heated and heated fluid, and fluid to be cooled and cooled fluid, respectively, each regenerator having a housing with two ports and at least two valves for each of its ports so arranged that fluid to be heated and fluid to be cooled can be passed, at different times, through that regenerator from the first duct to the second duct and from the third duct to the fourth duct, respectively.

6. A system according to any preceding claim characterised by a plurality of burners, each associated with a respective one of the regenerators and constructed to receive gas for combustion therefrom during operation and to supply gas thereto when temporarily closed down while other burners operate.

7. A system according to any preceding claim characterised by means for purging each regenerator.

8. A fixed bed thermal regenerator for a system according to any preceding claim comprising a housing having at least two ports and containing a packing material for heat storage, characterised in

- 12 -

that the surface to volume ratio of the packing material is in the range 150 to 10,000 metres$^{-1}$, and by the capability of the regenerator to oprate with fluid flow rates greater than 0.01 kilograms per second.

9. Method of operating a thermal regenerator system according to any of Claims 1 to 7 comprising employing a first group of the regenerators to change the temperature of fluid in one sense, using fluid to change the temperature of the packing of a second group of the regenerators in the same sense, reversing a third group of the regenerators from operating in the first group to operating in the second group, reversing a fourth group of the regenerators from operating in the secondary group to operating in the first group, characterised by systematically cycling each regenerator through each said group with at times all four of the said groups currently containing at least one regenerator.

10. A method according to Claim 9 insofar as dependent on Claim 6 characterised in that each burner is periodically operated and closed down and the associated regenerator heats gas from the burner during operation and removes heat from gas from the burner during close down.

11. A method according to Claim 9 characterised by systematically cycling each regenerator through a purging and/or cleaning operation.

HEATED GAS OUT

44
41

HOT GAS IN

104

108

101

105

10

11

12

29

103

107

COLD GAS IN

43
42

102

106

COOLED WASTE GAS OUT

45 — CONTROL COMPUTER

Fig.1

1/2

0136175

Fig. 2

CONTROL COMPUTER